# EUROPEAN PATENT SPECIFICATION

(11) **EP 0 482 681 B1**
(45) Date of publication and mention of the grant of the patent: **02.11.1994**
(21) Application number: 91202156.5
(22) Date of filing: 23.08.1991
(51) Int. Cl.: B60J 7/08, B60J 7/20

(54) **Convertible automobile**
Automobil mit beweglichem Dach
Voiture décapotable

(30) Priority: 21.09.1990 IT 2153690
(43) Date of publication of application: 29.04.1992
(73) Proprietor: FIAT AUTO S.p.A., 10135 Torino (IT)
(72) Inventor: Benedetto, Carmelo, I-20123 Milan (IT); Bertelli, Alberto, I-20139 Milan (IT)
(74) Representative: Henke, Erwin

(56) References cited:
- CH-A- 650 980
- DE-A- 3 623 468
- DE-A- 3 639 376
- FR-A- 2 159 973

## Description

This invention relates to a convertible automobile.

Innumerable automobiles of this type are known in which the passenger compartment roof is generally constructed of a non-rigid material which can be easily folded, for example in the manner of bellows, behind a pair of seats.

These types of automobile always present considerable problems in terms of gasket sealing, air infiltration, roof material deterioration and noise.

Other automobiles of this type have been constructed with a roof panel of rigid material which can be dismantled and stored in suitable compartments in the automobile or even removed from the automobile altogether. This construction has obvious problems in terms of space requirements and the slowness of the operations involved in disengaging, storing and re-engaging the roof panel.

A convertible automobile according to the preamble of claim 1 is known from DE-A-3 639 376
The object of the present invention is to provide a passenger compartment roof which is constructed of rigid elements but which can be disassembled such that by means of suitable movements it can be stored automatically or semi-automatically in a suitable housing provided to the rear of a pair of seats.

This object is attained according to the present invention by a convertible automobile according to claim 1.

The cover element of the housing is slidingly mobile by means of a pair of guides engaged with internal walls of said body.

In one embodiment of the present invention the rear window is hinged on at least one side to a pair of levers connected together by a crosspiece, at least one of said levers having a hinge point positioned approximately within a middle portion of the side of said body, said hinge enabling said rear window to enter said open housing in a position close to said axle by undergoing an upward translational movement and a downward rotary movement.

The roof panel is fixed to a system of levers, at least one of which is essentially of L-shape and which have a hinge point positioned within a portion of said body close to its upper edge, said system of levers being able to move said roof panel with translational movement towards said housing and to rotate said roof panel so that it positions itself to the front of said rear window within said housing.

According to the invention an electro-hydraulic or electro-mechanical drive can be provided for the translational movement and rotation of said rear window and said roof panel.

The structural and operational characteristics and advantages of a convertible automobile according to the present invention will be more apparent from the description given hereinafter by way of non-limiting example with reference to the accompanying schematic drawings, in which:

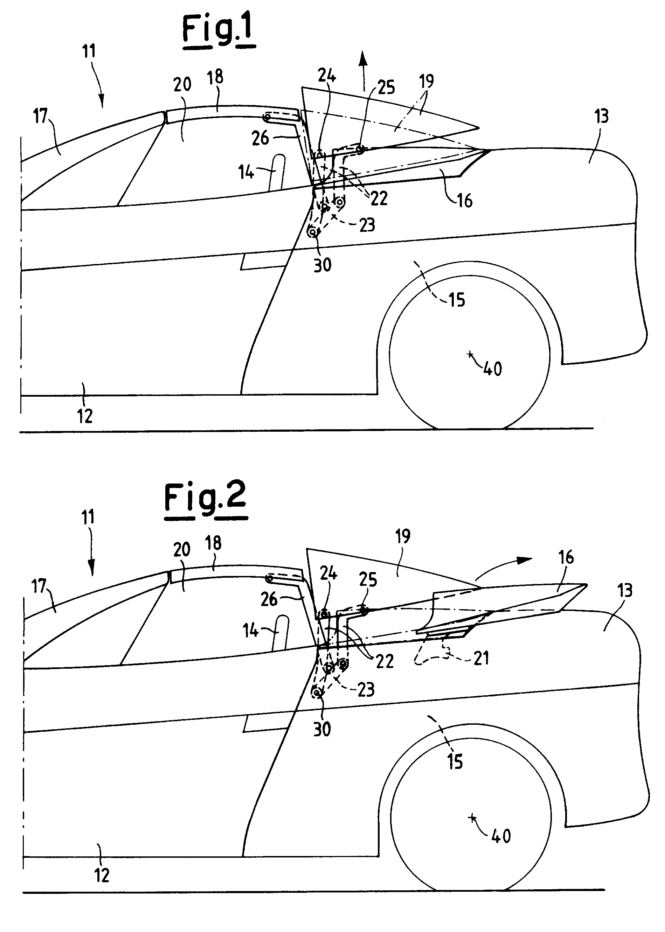

Figures 1 to 6 are side elevational views of an automobile according to the present invention with the component elements of the passenger compartment roof in different operating positions.

In the figures the reference numeral 11 indicates overall an automobile according to the invention and 12 its body, of which the rear portion is indicated by 13.

In the body portion 13 there is provided, to the rear of a pair of seats 14, a housing 15 having a cover element 16 and positioned in proximity to the automobile rear axle 40.

The windscreen 17, the roof panel 18 and the rear window 19 together define the passenger compartment 20 of the automobile.

The cover element 16 of the housing 15 is slidingly movable towards the rear portion of the body 12 by means of a pair of guides 21 which engage the inner walls of the body portion 13.

The rear window 19 is fixed on each side to a pair of levers 22, connected together by a crosspiece 23, by means of hinges 24 and 25 which enable the rear window to undergo translational and rotary movements.

A hinge point 30 for the pair of levers 22 is provided within an approximately middle portion of the body side.

The roof panel 18 is hinged to a system of levers indicated by 26 and 27, the hinge point 28 of which is situated in a position close to the upper edge 29 of the body.

According to one embodiment of the present invention, the articulated connections constituted by the hinged levers for the rear window and roof panel and also the movable cover element can be operated by an electro-hydraulic or electro-mechanical system.

These systems must be synchronized to enable the configuration of the automobile passenger compartment to be modified, as shown in Figures 1 to 6.

Specifically, Figure 1 shows a first stage in which the rear window 19 is raised upwards, in Figure 2 the rear window 19 remains in the same position while the cover element 16 slides towards the rear of the body to thus leave the space required to rotate the rear window 19 for its insertion into the housing 15 (shown in Figure 3).

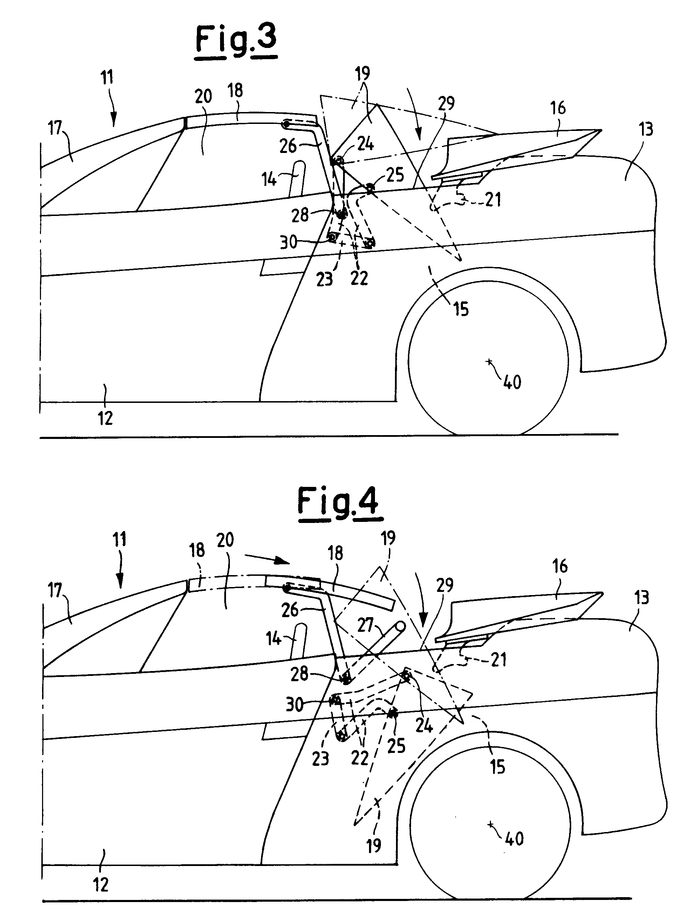

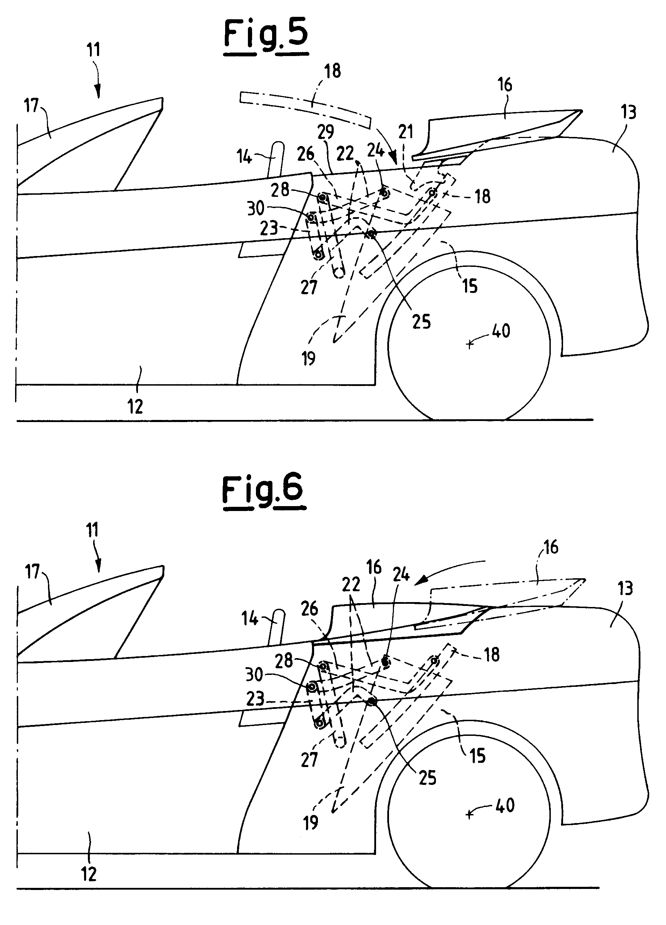

Figures 4 and 5 show the translational and rotary movements of the roof panel 18, which is inserted into the housing 15 in front of the rear window 19.

Figure 6 shows the final stage of this modification of the configuration of an automobile passenger compartment, in which the cover element 16 again slides frontwards to cover the housing in which the rear window 19 and roof panel 18 have been stored.

The roof panel and rear window as described in the present invention can be constructed of rigid materials, so giving the automobile an improved tightness against both water and air, with an undoubted improvement in noise characteristics.

In practice a convertible automobile is obtained having the same characteristics as an automobile the passenger compartment of which is covered with a fixed rigid structure.

## Claims

1. A convertible automobile (11) in which the body (12) is provided with a housing (15) having a cover element (16,19) located to the rear of a pair of seats (14) in proximity to the rear axle (40), and with a roof panel (18) connecting the windscreen (17) to the cover element (16,19), said roof panel (18), said windscreen (17), said cover element (16,19) and said body (12) defining the passenger compartment (20) of said automobile, wherein said roof panel (18) and said cover element (16,19) are two separate elements and are movable between a position in which they define the passenger compartment roof and a position in which said passenger compartment is uncovered, said cover element (16,19) or said housing (15) being movable to enable said roof panel (18) to disappear into said housing (15) by successive rotary and translational movements, characterised in that said cover element comprises a rear window (19) and an end cover element (16), in that said end cover element (16) is slidingly movable between a rear position on a rear portion (13) of said body and a forward position within said passenger compartment (20) by a pair of internal guides (21) engaged with inner walls of said rear portion (13) of the body, and in that said rear window (19) is movable into said housing by independent rotary and translational movements.

2. A convertible automobile as claimed in claim 1,
characterised in that said rear window (19) is hinged on at least one side to a pair of levers (22) connected together by a crosspiece (23), one of said levers having a hinge point (30) positioned approximately within a middle portion of the side of said body, said hinge point (30) enabling said rear window (19) to enter said open housing (15) in a position close to said rear axle (40) by undergoing an upward translational movement and a downward rotary movement.

3. A convertible automobile as claimed in claim 1,
characterized in that said roof panel (18) is fixed to a system of levers (26,27), at least one (26) of which is essentially of L-shape and which have a hinge point (28) positioned within a portion of said body close to its upper edge (29), said system of levers (26,27) being able to move said roof panel (18) with translational movement towards said housing (15) and to rotate said roof panel (18) so that it positions itself to the front of said rear window (19) within said housing (15).

4. A convertible automobile as claimed in claim 1,
characterised in that an electro-hydraulic drive is provided for the translational movement and rotation of said rear window (19) and said roof panel (18).

5. A convertible automobile as claimed in claim 1,
characterised in that an electro-mechanical drive is provided for the translational movement and rotation of said rear window (19 and said roof panel (18).

## Patentansprüche

1. Automobil (11) mit beweglichem Dach, bei dem die Karosserie (12) mit einem Stauraum (15) versehen ist, der ein Abdeckelement (16,19) aufweist und hinter einem Paar von Sitzen (14) in der Nähe der Hinterachse (40) angeordnet ist, und mit einer Dachplatte (18), die die Windschutzscheibe (17) mit dem Abdeckelement (16, 19) verbindet, wobei die Dachplatte (18), die Windschutzscheibe (17), das Abdeckelement (16, 19) und die Karosserie (12) die Fahrgastzelle (20) des Automobils definieren, wobei die Dachplatte (18) und das Abdeckelement (16, 19) zwei getrennte Elemente sind und zwischen einer Position, in der sie das Dach der Fahrgastzelle bilden, und einer Position, in der die Fahrgastzelle nicht überdacht ist, beweglich sind, wobei das Abdeckelement (16, 19) des Stauraums (15) so beweglich ist, daß die Dachplatte (19) in der Stauraum(15) durch aufeinanderfolgende Dreh- und Translationsbewegungen verschwinden kann, dadurch **gekennzeichnet,** daß das Abdeckelement ein Rückfenster (19) und ein Endabdeckelement (16) umfaßt, daß das Endabdeckelement (16) verschiebbar ist zwischen einer hinteren Position an einem hinteren Abschnitt (13) der Karosserie und einer vorderen Position innerhalb der Fahrgastzelle (20) mittels eines Paars von inneren Führungen (21), die an den Innenwänden des hinteren Abschnitts (13) der Karosserie angreifen, und daß das Rückfenster (19) durch unabhängige Dreh- und Translationsbewegungen in den Stauraum hinein bewegbar ist.

2. Automobil mit beweglichem Dach nach Anspruch 1,
dadurch **gekennzeichnet,** daß das Rückfenster (19) an mindestens einer Seite an zwei Hebel (92) angelenkt ist, die durch ein Querstück (23) verbunden sind, wobei einer der Hebel einen Gelenkpunkt (30) ungefähr in einem Mittelabschnitt der Seite der Karosserie aufweist, wobei der Gelenkpunkt (30) den Eintritt des Rückfensters (19) in die offenen Stauraum (15) in einer Position nahe der Hinterachse (40) unter Durchführung einer aufwärts gerichteten Verschiebebewegung und einer abwärts gerichteten Drehbewegung ermöglicht.

3. Automobil mit beweglichem Dach nach Anspruch 1,
dadurch **gekennzeichnet,** daß die Dachplatte (18) an einem System von Hebeln (26, 27) befestigt ist, von denen mindestens einer (26) im wesentlichen L-förmig ist und die einen Gelenkpunkt (28) aufweisen, der in einem Abschnitt der Karosserie nahe ihrer oberen Kante (29) angeordnet ist, wobei das System von Hebeln (26, 27) in der Lage ist, die Dachplatte (18) mit einer Translationsbewegung in Richtung auf den Stauraum (15) zu bewegen und die Dachplatte (18) so zu drehen, daß sie sich vor das Rückfenster (19) innerhalb des Stauraums (15) positioniert.

4. Automobil mit beweglichem Dach nach Anspruch 1,
dadurch **gekennzeichnet,** daß ein elektrohydraulischer Antrieb vorgesehen ist für die Translationsbewegung und Drehung des Rückfensters (19) und der Dachplatte (18).

5. Automobil mit beweglichem Dach nach Anspruch 1,
dadurch **gekennzeichnet,** daß ein elektromechanischer Antrieb vorgesehen ist für die Verschiebebewegung und Drehung des Rückfensters (19) und der Dachplatte (18).

## Revendications

1. Une voiture décapotable (11) dans laquelle la caisse (12) est munie d'un logement (15) ayant une capote (16,19) située à l'arrière d'une paire de sièges (14) au voisinage de l'essieu arrière (40), un panneau de pavillon (18) reliant le pare-brise (17) à la capote (16,19), ledit panneau de pavillon (18), ledit pare-brise (17), ladite capote (16,19) et ladite caisse (12) définissant l'habitacle des passagers (20) de ladite voiture, dans laquelle ledit panneau de pavillon (18) et ladite capote (16,19) sont deux éléments séparés et sont mobiles entre une position dans laquelle ils définissent le pavillon de l'habitacle des passagers et une position dans laquelle ledit habitacle des passagers est découvert, ladite capote (16,19) dudit logement (15) étant mobile pour permettre audit panneau de pavillon (18) de disparaître dans ledit logement (15) par des mouvements de rotation et de translation successifs, caractérisée en ce que ladite capote comprend une lunette arrière (19) et un élément de couverture d'extrémité (16), en ce que ledit élément de couverture d'extrémité (16) est mobile de façon coulissante entre une position arrière sur une partie arrière (13) de ladite caisse et une position avant dans ledit habitacle des passagers (20) au moyen d'une paire de guides internes (21) en contact avec des parois internes de ladite partie arrière (13) de la caisse et en ce que ladite lunette arrière (19) est mobile dans ledit logement par des mouvements de rotation et de translation indépendants.

2. Une voiture décapotable selon la revendication 1,
caractérisée en ce que ladite lunette arrière (19) est articulée sur au moins un côté à une paire de leviers (22) reliés ensemble par une entretoise (23) un desdits leviers ayant un point d'articulation (30) situé approximativement dans une partie médiane du côté de ladite caisse, ledit point d'articulation (30) permettant à ladite lunette arrière (19) de pénétrer dans ledit logement ouvert (15) dans une position proche dudit essieu arrière (40) en subissant un mouvement de translation vers le haut et un mouvement de rotation vers le bas.

3. Une voiture décapotable selon la revendication 1,
caractérisée en ce que ledit panneau de pavillon (18) est fixé à un système de leviers (26,27) dont au moins un (26) est essentiellement en forme de L et qui comportent un point d'articulation (28) disposé dans une partie de ladite caisse près de son bord supérieur (29), ledit système de leviers (26,27) étant capable de déplacer ledit panneau de pavillon (18) avec un mouvement de translation vers ledit logement (15) et de faire tourner ledit panneau de pavillon (18) afin qu'il se positionne de lui-même à l'avant de ladite lunette arrière (19) dans ledit logement (15).

4. Une voiture décapotable selon la revendication 1,
caractérisée en ce qu'une commande électro-hydraulique est prévue pour le mouvement de translation et de rotation de ladite lunette arrière (19) et dudit panneau de pavillon (18).

5. Une voiture décapotable selon la revendication 1,
caractérisée en ce qu'une commande électromécanique est prévue pour le mouvement de translation et de rotation de ladite lunette arrière (19) et dudit panneau de pavillon (18).
